# EUROPEAN PATENT APPLICATION

(11) **EP 2 398 007 A1**
(43) Date of publication of application: **21.12.2011**
(21) Application number: 09839962.9
(22) Date of filing: 14.10.2009
(51) Int. Cl.: G09F 9/30, G02F 1/1345, G02F 1/1368, G09F 9/00

(54) **DISPLAY DEVICE AND METHOD FOR MANUFACTURING SAME, AND ACTIVE MATRIX SUBSTRATE**

(30) Priority: 13.02.2009 JP 2009031493
(71) Applicant: Sharp Kabushiki Kaisha, Osaka-shi, Osaka 545-8522 (JP)
(72) Inventor: UEDA, Noboyoshi, Osaka-shi, Osaka 545-8522 (JP); YAMADA, Takaharu, Osaka-shi, Osaka 545-8522 (JP); OZEKI, Tadatoshi, Osaka-shi, Osaka 545-8522 (JP); HORIUCHI, Satoshi, Osaka-shi, Osaka 545-8522 (JP); OKAMOTO, Takashi, Osaka-shi, Osaka 545-8522 (JP); YAMAGUCHI, Teruhiku, Osaka-shi, Osaka 545-8522 (JP); OGASAWARA, Isao, Osaka-shi, Osaka 545-8522 (JP)
(74) Representative: Müller - Hoffmann & Partner
(86) International application number: PCT/JP2009/005343
(87) International publication number: WO 2010/092639

(57) **Abstract**

A display device includes: a display panel (40a) having a plurality of display interconnects (3) provided so as to extend parallel to each other; a drive circuit (44a) provided on a side of one ends of the display interconnects (3), and connected to the display interconnects (3); a first interconnect path (Wa) and a second interconnect path (Wb) that are provided so as to cross the one ends of the display interconnects (3) in an insulating state; and a third interconnect path (Wc) that crosses the other ends of the display interconnects (3) in an insulating state, and is connected to the first interconnect path (Wa) and the second interconnect path (Wb). An amplifier circuit (A) is provided in a path including the first interconnect path (Wa) and the second interconnect path (Wb), and in a path including the first interconnect path (Wa) and the third interconnect path (Wc).

## Description

### TECHNICAL FIELD

The present invention relates to display devices, methods for manufacturing the same, and active matrix substrates, and more particularly to techniques of repairing disconnections of display interconnects arranged in active matrix substrates and display devices.

### BACKGROUND ART

Liquid crystal display (LCD) devices include, e.g., an active matrix substrate and a counter substrate that are positioned so as to face each other. This active matrix substrate includes as display interconnects, e.g., a plurality of gate lines provided so as to extend parallel to each other, and a plurality of source lines provided so as to extend parallel to each other in a direction perpendicular to the gate lines. Thus, if any of the display interconnects such as the gate lines and the source lines is disconnected in the LCD devices having such an active matrix substrate, a display signal from a drive circuit is not supplied to the part of the display interconnect located beyond the disconnected position, whereby display quality is significantly reduced.

In order to solve this problem, various LCD devices have been proposed which include, outside a display region for displaying an image, an interconnect for repairing disconnections, and an amplifier circuit connected to the interconnect (see, e.g., Patent Documents 1-4).

### CITATION LIST

### PATENT DOCUMENT

PATENT DOCUMENT 1: Japanese Patent Publication No. 2000-321599
PATENT DOCUMENT 2: Japanese Patent Publication No. H11-160677
PATENT DOCUMENT 3: Japanese Patent Publication No. 2000-105576
PATENT DOCUMENT 4: Japanese Patent Publication No. 2008-58337

### SUMMARY OF THE INVENTION

### TECHNICAL PROBLEM

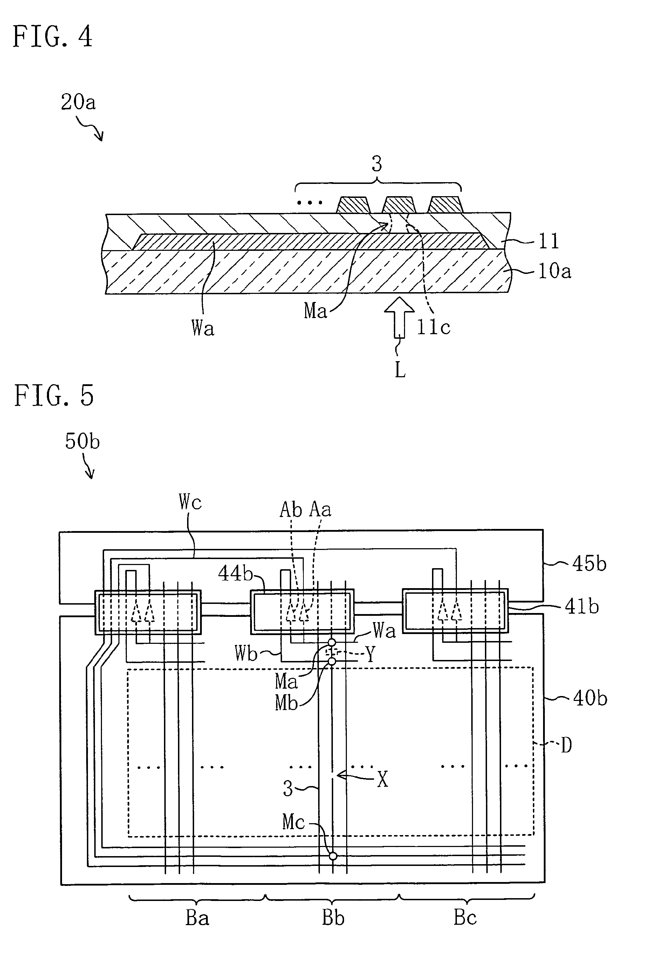

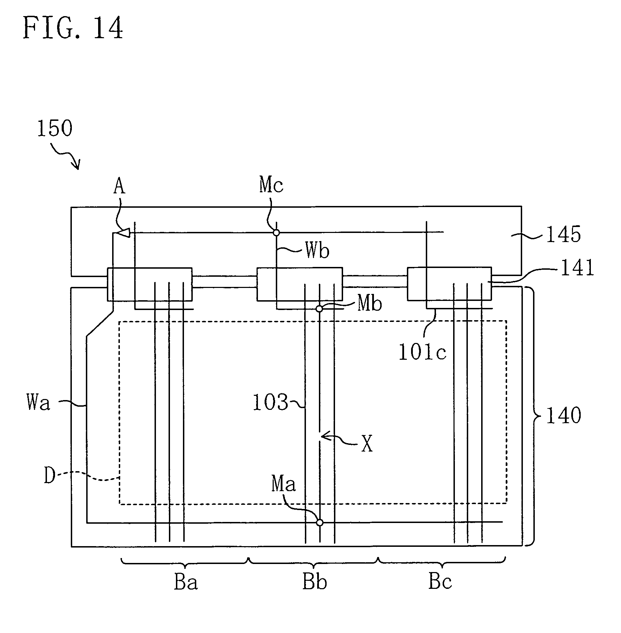

FIG. 14 is a plan view of a conventional LCD device 150 corresponding to a schematic plan view of an LCD element and drive circuit substrates placed in an outer peripheral portion of the LCD element, shown in FIG. 5 of Patent Document 1.

As shown in FIG. 14, the LCD device 150 includes an LCD panel 140, three film substrates 141 attached to the upper end of the LCD panel 140 in the figure, and a printed wiring board 145 attached to the upper ends of the film substrates 141 in the figure.

As shown in FIG. 14, the LCD panel 140 includes, in a display region D, a plurality of source lines 103 provided so as to extend parallel to each other, and a plurality of gate lines (not shown) provided so as to extend parallel to each other in a direction perpendicular to the source lines 103. As shown in FIG. 14, the plurality of source lines 103 are divided into, e.g., three blocks Ba, Bb, and Bc each formed by adjacent ones of the source lines 103, and the source lines 103 in each block Ba, Bb, Bc are connected to a drive circuit (not shown) on a corresponding one of the film substrates 141 provided in the blocks Ba, Bb, and Bc, respectively.

As shown in FIG. 14, the LCD device 150 further includes a first interconnect path Wa having substantially a "U" shape, and three second interconnect paths Wb having substantially an "L" shape. The first interconnect path Wa is provided to extend along the lower and left sides of the LCD panel 140 in the figure so as to cross the lower ends of the source lines 103 in the figure, and to extend along the upper side of the printed wiring board 145 in the figure via the film substrate 141 located on the left side in the figure. The second interconnect path Wb is provided in each block Ba, Bb, Bc of the LCD panel 140 so as to cross the upper ends of the source lines 103 in the figure in a region outside the display region D, and to cross the first interconnect path Wa on the printed wiring board 145. As shown in FIG. 14, an amplifier circuit A is provided in the left end of the first interconnect path Wa in the figure in the printed wiring board 145.

In the LCD device 150 having the above configuration, if the source line 103 in the block Bb is disconnected at a position X as shown in FIG. 14, an intersection Ma of the lower part of the disconnected source line 103 in the figure and the first interconnect path Wa, an intersection Mb of the upper part of the disconnected source line 103 in the figure and the second interconnect path Wb of the block Bb, and an intersection Mc of the first interconnect path Wa and the second interconnect path Wb of the block Bb are irradiated with laser light, thereby making an electrical connection between the lower part of the disconnected source line 103 in the figure and the first interconnect path Wa, an electrical connection between the upper part of the disconnected source line 103 in the figure and the second interconnect path Wb of the block Bb, and an electrical connection between the first interconnect path Wa and the second interconnect path Wb of the block Bb. Thus, as shown in FIG. 14, a display signal (a source signal) from the drive circuit (not shown) provided on the film substrate 141 is supplied to the part of the source line 103 located below the disconnected position X in the figure, via the second interconnect path Wb of the block Bb and the first interconnect path Wa having the amplifier circuit A. Since the source signal from the drive circuit is also supplied to the part of the source line 103 beyond the disconnected position (the position X), the disconnection of the source line 103 can be repaired.

However, in the LCD device 150 having the above configuration, as shown in FIG. 14, the second interconnect path Wb corresponding to one block is connected to the part of the repaired source line 103 located above the position X in the figure, and this second interconnect path Wb crosses all the source lines 103 located in the block Bb. Thus, the source signal is delayed in the part of the repaired source line 103 located down to the disconnected position (the position X) due to the electrical resistance resulting from extending the second interconnect path Wb in one block, and the electrical capacitance at the intersections of the second interconnect path Wb in one block and the source lines 103. In this case, the brightness of the pixels along the repaired source line 103 varies due to insufficient charging, whereby display quality can be reduced.

The present invention was developed in view of the above problem, and it is an object of the present invention to reduce a signal delay that is caused in a display interconnect when repairing a disconnection.

### SOLUTION TO THE PROBLEM

In order to achieve the above object, according to the present invention, interconnect paths are provided so as to supply a display signal from a drive circuit not only to the other side (the opposite side from the drive circuit) of a disconnected display interconnect, but also to one side (the side of the drive circuit) thereof via an amplifier circuit.

Specifically, a display device according to the present invention includes: a display panel having a plurality of display interconnects provided so as to extend parallel to each other; a drive circuit provided on a side of one ends of the display interconnects, and connected to the display interconnects; a first interconnect path and a second interconnect path that are provided so as to cross the one ends of the display interconnects in an insulating state; and a third interconnect path that crosses the other ends of the display interconnects in an insulating state, and is connected to the first interconnect path and the second interconnect path, wherein an amplifier circuit is provided in a path including the first interconnect path and the second interconnect path, and in a path including the first interconnect path and the third interconnect path.

According to the above configuration, the first interconnect path and the third interconnect path are provided so as to cross both ends of the display interconnects in the insulating state, respectively, in order to supply a display signal from the drive circuit to the other side (the opposite side from the drive circuit) of the disconnected display interconnect via the amplifier circuit. In addition, the second interconnect path is provided so as to cross the one ends of the display interconnects in the insulating state, in order to supply the display signal from the drive circuit to one side (the side of the drive circuit) of the disconnected display interconnect via the amplifier circuit. Thus, if the presence of any disconnection is detected in one of the plurality of display interconnects, the one end of the display interconnect having the detected disconnection is connected to the first interconnect path and the second interconnect path, and the other end of the display interconnect having the detected disconnection is connected to the third interconnect path. Then, the one end of the display interconnect having the detected disconnection is cut so that no display signal from the drive circuit is directly supplied to the one side of this display interconnect. Thus, the display signal from the drive circuit is supplied not only to the other side of the repaired display interconnect but also to the one side thereof via the amplifier circuit, whereby a signal delay that is caused in the display interconnect when repairing the disconnection is reduced.

The amplifier circuit may be provided in the first interconnect path.

With the above configuration, the display signal from the drive circuit is supplied to the one side of the disconnected display interconnect via the amplifier circuit for supplying the display signal from the drive circuit to the other side of the disconnected display interconnect. Thus, a signal delay that is caused in the display interconnect when repairing the disconnection can be reduced without providing any additional amplifier circuit.

The amplifier circuit may be provided in each of the second interconnect path and the third interconnect path.

With the above configuration, the display signal from the drive circuit is supplied to the one side of the disconnected display interconnect via the another amplifier circuit that is different from the amplifier circuit for supplying the display signal from the drive circuit to the other side of the disconnected display interconnect. Thus, capability of the amplifier circuit for supplying the display signal from the drive circuit to the other side of the disconnected display interconnect can be designed separately from that of the amplifier circuit for supplying the display signal from the drive circuit to the one side of the disconnected display interconnect.

The amplifier circuit may be contained in the drive circuit.

With the above configuration, since the amplifier circuit is contained in the drive circuit, the number of external substrates to be attached to the display panel can be reduced.

The plurality of display interconnects may be divided into a plurality of blocks each formed by adjoining ones of the display interconnects, and multiple ones of the drive circuit may be provided for the blocks, respectively.

With the above configuration, since the drive circuit is provided in each block, disconnections of the display interconnects can be repaired on a block-by-block basis.

The drive circuit may be a single drive circuit.

With the above configuration, since there is one drive circuit, the interconnect paths are designed to have a great length, and thus a signal delay tends to occur in a repaired display interconnect. However, since the signal delay that is caused in the display interconnect when repairing a disconnection is reduced as described above, the operational advantages of the present invention can be effectively provided.

At least one of a load capacitor and a load resistor that are capable of adjusting a waveform of a display signal from the drive circuit may be connected to at least one of the first interconnect path, the second interconnect path, and the third interconnect path.

With the above configuration, at least one of the load capacitor and the load resistor that are capable of adjusting the waveform of the display signal from the drive circuit is connected to at least one of the first interconnect path, the second interconnect path, and the third interconnect path. Thus, if pixels along a repaired display interconnect are excessively charged as compared to the other normal pixels, this display interconnect can be repaired by the first interconnect path, the second interconnect path, and the third interconnect path by operating the at least one of the load capacitor and the load resistor, which is connected to the at least one of the first interconnect path, the second interconnect path, and the third interconnect path.

At least one of a load capacitor and a load resistor that are capable of adjusting a waveform of a display signal from the drive circuit may be provided so as to be able to be connected to at least one of the first interconnect path, the second interconnect path, and the third interconnect path.

With the above configuration, at least one of the load capacitor and the load resistor that are capable of adjusting the waveform of the display signal from the drive circuit is provided so as to be able to be connected to at least one of the first interconnect path, the second interconnect path, and the third interconnect path. Thus, if pixels along a repaired display interconnect are excessively charged as compared to the other normal pixels, this display interconnect can be repaired by the first interconnect path, the second interconnect path, and the third interconnect path by connecting the at least one of the load capacitor and the load resistor to the at least one of the first interconnect path, the second interconnect path, and the third interconnect path, and operating the at least one of the load capacitor and the load resistor, which is connected to the at least one of the first interconnect path, the second interconnect path, and the third interconnect path.

The drive circuit may be provided on the display panel, a film substrate may be attached to the display panel, and at least one of the first interconnect path, the second interconnect path, and the third interconnect path may be provided so as to extend through the film substrate.

With the above configuration, since the drive circuit is provided on the display panel, and the at least one of the first interconnect path, the second interconnect path, and the third interconnect path is provided so as to extend through the film substrate, interconnect layout around the drive circuit can be simplified.

A film substrate may be attached to the display panel, the drive circuit may be provided on the film substrate, a printed wiring board may be attached to the film substrate, and at least one of the first interconnect path, the second interconnect path, and the third interconnect path may be provided so as to extend through the film substrate and the printed wiring board.

With the above configuration, since the drive circuit is provided on the film substrate, and the at least one of the first interconnect path, the second interconnect path, and the third interconnect path is provided so as to extend through the film substrate and the printed wiring board, interconnect layout in the film substrate can be simplified.

The drive circuit, the first interconnect path, the second interconnect path, and the third interconnect path may be provided on the display panel.

With the above configuration, since the drive circuit, the first interconnect path, the second interconnect path, and the third interconnect path are provided on the display panel, interconnect layout in, e.g., a film substrate attached to the display panel can be simplified.

The first interconnect path and the second interconnect path may be provided so as to be separated from each other so that each of the display interconnects can be cut.

With the above configuration, since the first interconnect path and the second interconnect path are provided so as to be separated from each other by, e.g., 5 µm or more, the display interconnect having a detected disconnection can be easily cut at a position between the first interconnect path and the second interconnect path. This specifically enables a display signal from the drive circuit not to be directly supplied to the one side of the display interconnect having the detected disconnection.

The display panel may have a plurality of gate lines and a plurality of source lines, which are provided so as to cross each other, and an insulating film provided between a layer of the plurality of gate lines and a layer of the plurality of source lines, and the display interconnects, the first interconnect path, the second interconnect path, and the third interconnect path may be provided so that the display interconnects can be connected to the first interconnect path, the second interconnect path, and the third interconnect path by forming a contact hole in the insulating film.

With the above configuration, an insulating film placed between a layer of the display interconnects and layers of the first interconnect path, the second interconnect path, and the third interconnect path is the same as the insulating film placed between the layer of the plurality of gate lines and the layer of the plurality of source lines. Thus, the first interconnect path, the second interconnect path, and the third interconnect path for repairing disconnections can be configured without adding any manufacturing step.

A method for manufacturing a display device according to the present invention is a method for manufacturing a display device including a display panel having a plurality of display interconnects provided so as to extend parallel to each other, a drive circuit provided on a side of one ends of the display interconnects, and connected to the display interconnects, a first interconnect path and a second interconnect path that are provided so as to cross the one ends of the display interconnects in an insulating state, and a third interconnect path that crosses the other ends of the display interconnects in an insulating state, and is connected to the first interconnect path and the second interconnect path, where an amplifier circuit is provided in a path including the first interconnect path and the second interconnect path, and in a path including the first interconnect path and the third interconnect path, the method including: a disconnection detecting step of detecting presence of any disconnection in the display interconnects; an interconnect connecting step of connecting the one end of the display interconnect having the disconnection detected in the disconnection detecting step to the first interconnect path and the second interconnect path, and connecting the other end of the display interconnect to the third interconnect path; and an interconnect cutting step of cutting the one end of the display interconnect having the disconnection detected in the disconnection detecting step, so that no display signal from the drive circuit is directly supplied to one side of the display interconnect.

According to the above method, the first interconnect path and the third interconnect path are provided so as to cross both ends of the display interconnects in the insulating state, respectively, in order to supply the display signal from the drive circuit to the other side (the opposite side from the drive circuit) of the disconnected display interconnect via the amplifier circuit. In addition, the second interconnect path is provided so as to cross the one ends of the display interconnects in the insulating state, in order to supply the display signal from the drive circuit to one side (the side of the drive circuit) of the disconnected display interconnect via the amplifier circuit. Thus, if the presence of any disconnection is detected in one of the plurality of display interconnects in the disconnection detecting step, the one end of the display interconnect having the detected disconnection is connected to the first interconnect path and the second interconnect path, and the other end of the display interconnect having the detected disconnection is connected to the third interconnect path in the interconnect connecting step. Then, in the interconnect cutting step, the one end of the display interconnect having the detected disconnection is cut so that no display signal from the drive circuit is directly supplied to the one side of this display interconnect. Thus, the display signal from the drive circuit is supplied not only to the other side of the repaired display interconnect but also to the one side thereof via the amplifier circuit, whereby a signal delay that is caused in the display interconnect when repairing the disconnection is reduced.

The interconnect connecting step and the interconnect cutting step may be performed by laser radiation.

In the above method, in the interconnect connecting step, intersections of the one end of the display interconnect having the detected disconnection and the first and second interconnect paths, and an intersection of the other end of the display interconnect having the detected disconnection and the third interconnect path are irradiated with laser light. Thus, the one end of the display interconnect having the detected disconnection is connected to the first interconnect path and the second interconnect path, and the other end of the display interconnect having the detected disconnection is connected to the third interconnect path. Then, in the interconnect cutting step, the one end of the display interconnect having the detected disconnection is irradiated with laser light, whereby no display signal from the drive circuit is directly supplied to the one side of the display interconnect having the detected interconnect. Thus, the display signal from the drive circuit is supplied not only to the other side of the repaired display interconnect but also to the one side thereof via the amplifier circuit, whereby a signal delay that is caused in the display interconnect when repairing the disconnection is specifically reduced.

An active matrix substrate according to the present invention includes: a plurality of display interconnects provided so as to extend parallel to each other; a drive circuit provided on a side of one ends of the display interconnects, and connected to the display interconnects; a first interconnect path and a second interconnect path that are provided so as to cross the one ends of the display interconnects in an insulating state; and a third interconnect path that crosses the other ends of the display interconnects in an insulating state, and is connected to the first interconnect path and the second interconnect path, wherein an amplifier circuit is provided in a path including the first interconnect path and the second interconnect path, and in a path including the first interconnect path and the third interconnect path.

According to the above configuration, the first interconnect path and the third interconnect path are provided so as to cross both ends of the display interconnects in the insulating state, respectively, in order to supply a display signal from the drive circuit to the other side (the opposite side from the drive circuit) of the disconnected display interconnect via the amplifier circuit. In addition, the second interconnect path is provided so as to cross the one ends of the display interconnects in the insulating state, in order to supply the display signal from the drive circuit to one side (the side of the drive circuit) of the disconnected display interconnect via the amplifier circuit. Thus, if the presence of any disconnection is detected in one of the plurality of display interconnects, the one end of the display interconnect having the detected disconnection is connected to the first interconnect path and the second interconnect path, and the other end of the display interconnect having the detected disconnection is connected to the third interconnect path. Then, the one end of the display interconnect having the detected disconnection is cut so that no display signal from the drive circuit is directly supplied to the one side of this display interconnect. Thus, the display signal from the drive circuit is supplied not only to the other side of the repaired display interconnect but also to the one side thereof via the amplifier circuit, whereby a signal delay that is caused in the display interconnect when repairing the disconnection is reduced in the active matrix substrate.

### ADVANTAGES OF THE INVENTION

According to the present invention, interconnect paths are provided so as to supply a display signal from a drive circuit not only to the other side of a disconnected display interconnect but also to one side thereof via an amplifier circuit. Thus, a signal delay that is caused in the display interconnect when repairing the disconnection can be reduced.

### BRIEF DESCRIPTION OF THE DRAWINGS

[FIG. 1] FIG. 1 is a plan view of an LCD device 50a of a first embodiment.
[FIG. 2] FIG. 2 is a plan view showing one pixel in an active matrix substrate 20a of the LCD device 50a.
[FIG. 3] FIG. 3 is a cross-sectional view of the active matrix substrate 20a and an LCD panel 40a including the same, taken along line III-III in FIG. 2.
[FIG. 4] FIG. 4 is a cross-sectional view of the active matrix substrate 20a taken along line IV-IV in FIG. 1.
[FIG. 5] FIG. 5 is a plan view of an LCD device 50b of a second embodiment.
[FIG. 6] FIG. 6 is a plan view of an LCD device 50c of a third embodiment.
[FIG. 7] FIG. 7 is a plan view of a load capacitor portion C of the LCD device 50c.
[FIG. 8] FIG. 8 is a plan view of another load capacitor portion C of the LCD device 50c.
[FIG. 9] FIG. 9 is a plan view of a load resistor portion R of the LCD device 50c.
[FIG. 10] FIG. 10 is a plan view of another load resistor portion R of the LCD device 50c.
[FIG. 11] FIG. 11 is a plan view of a load resistor capacitor portion E of the LCD device 50c.
[FIG. 12] FIG. 12 is a plan view of an LCD device 50d of a fourth embodiment.
[FIG. 13] FIG. 13 is a plan view of an LCD device 50e of a fifth embodiment.
[FIG. 14] FIG. 14 is a plan view of a conventional LCD device 150.

### DESCRIPTION OF EMBODIMENTS

Embodiments of the present invention will be described in detail below with reference to the accompanying drawings. Note that the present invention is not limited to the following embodiments.

### (First Embodiment)

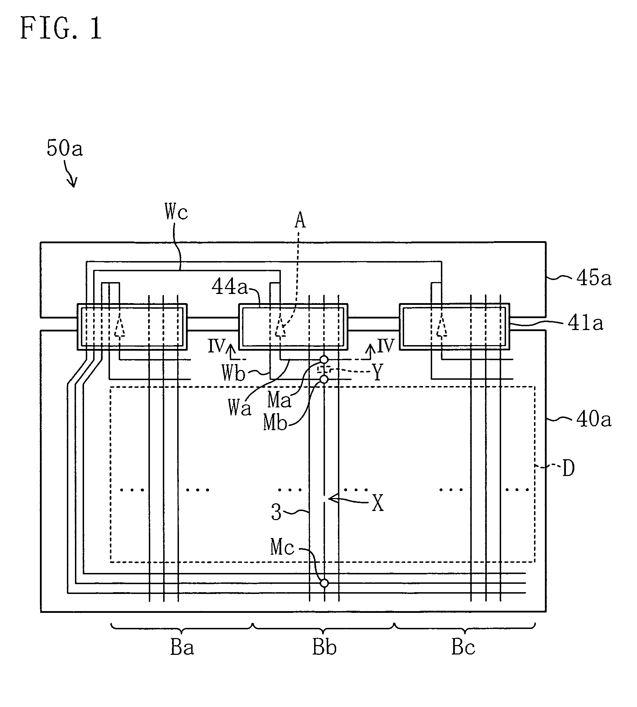

FIGS. 1-4 show a first embodiment of a display device, a manufacturing method thereof, and an active matrix substrate according to the present invention.

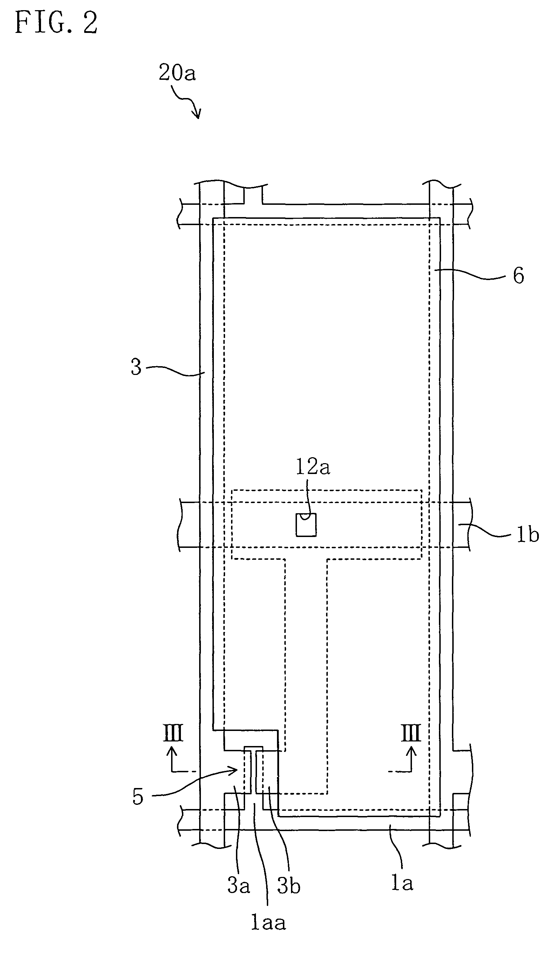

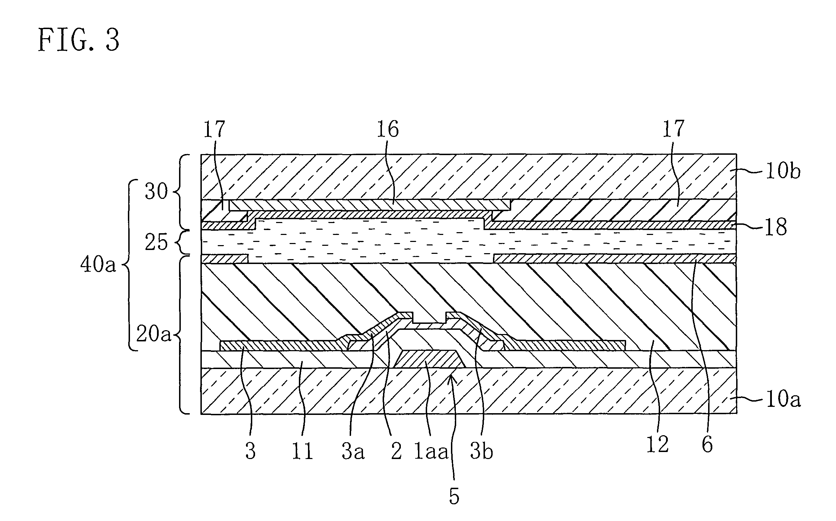

Specifically, FIG. 1 is a plan view of an LCD device 50a of the present embodiment, and FIG. 2 is a plan view showing one pixel in an active matrix substrate 20a of the LCD device 50a. FIG. 3 is a cross-sectional view of the active matrix substrate 20a and an LCD panel 40a including the same, taken along line III-III in FIG. 2, and FIG. 4 is a cross-sectional view of the active matrix substrate 20a taken along line IV-IV in FIG. 1.

As shown in FIG. 1, the LCD device 50a includes an LCD panel 40a, three film substrates 41 a attached to the upper end of the LCD panel 40a in the figure via an anisotropic conductive film (ACF, not shown), and a printed wiring board 45a attached to the upper ends of the film substrates 41 a in the figure via an ACF (not shown).

As shown in FIG. 3, the LCD panel 40a includes the active matrix substrate 20a and a counter substrate 30 that are positioned so as to face each other, and a liquid crystal layer 25 provided between the active matrix substrate 20a and the counter substrate 30.

As shown in FIG. 1, a display region D for displaying an image is defined in the LCD panel 40a, and the display region D has three blocks Ba, Bb, and Bc that extend parallel to each other.

As shown in FIGS. 1-3, the active matrix substrate 20a includes in the display region D: a plurality of gate lines 1a provided as display interconnects on an insulating substrate 10a so as to extend parallel to each other; a plurality of capacitor lines 1b each provided between adjoining ones of the gate lines 1a so as to extend parallel to each other; a gate insulating film 11 provided so as to cover the gate lines 1a and the capacitor lines 1b; a plurality of source lines 3 provided as display interconnects on the gate insulating film 11 so as to extend parallel to each other in a direction perpendicular to the gate lines 1a; a plurality of thin film transistors (TFTs) 5 provided at the intersections of the gate lines 1a and the source lines 3; an interlayer insulating film 12 provided so as to cover the TFTs 5 and the source lines 3; a plurality of pixel electrodes 6 provided in a matrix pattern on the interlayer insulating film 12; and an alignment film (not shown) provided so as to cover the pixel electrodes 6.

As shown in FIGS. 2-3, each TFT 5 includes: a gate electrode 1aa that is a laterally protruding portion of the gate line 1a; the gate insulating film 11 provided so as to cover the gate electrode 1aa; an island-shaped semiconductor layer 2 provided at a position corresponding to the gate electrode 1aa on the gate insulating film 11; and a source electrode 3a and a drain electrode 3b that are provided so as to face each other on the semiconductor layer 2. As shown in FIG. 2, the source electrode 3a is a laterally protruding portion of the source line 3. As shown in FIG. 2, the drain electrode 3b is extended to a region that overlaps the capacitor line 1b, thereby forming an auxiliary capacitor. The drain electrode 3b is connected to the pixel electrode 6 via a contact hole 12a formed in the interlayer insulating film 12 over the capacitor line 1b.

As shown in FIG. 3, the counter substrate 30 includes: an insulating substrate 10b; a black matrix 16 provided in a frame shape on the insulating substrate 10b and in a grid pattern within the frame; a color filter 17 including red, green, and blue layers provided between the grid lines of the black matrix 16; a common electrode 18 provided so as to cover the black matrix 16 and the color filter 17; columnar photo spacers (not shown) provided on the common electrode 18; and an alignment film (not shown) provided so as to cover the common electrode 18.

The liquid crystal layer 25 is made of a nematic liquid crystal material having electro-optic characteristics, etc.

As shown in FIG. 1, a source driver 44a is mounted as a drive circuit on each film substrate 41 a.

As shown in FIG. 1, all the source lines 3 placed in each block Ba-Bc are connected to a corresponding one of the source drivers 44a. Each source drive 44a contains a part of a first interconnect path Wa described below, an amplifier circuit A provided in the part of the first interconnect path Wa, a part of a second interconnect path Wb, and a part of a third interconnect path Wc.

Each gate line 1 a is connected to a gate driver (not shown) mounted on an end of the panel or on the film substrate attached to the end of the panel.

As shown in FIG. 1, the LCD device 50a has three first interconnect paths Wa having substantially an "L" shape, three second interconnect paths Wb having substantially an "L" shape, and three third interconnect paths Wc having substantially a "U" shape. Each of the first interconnect paths Wa extends along the upper side of the LCD panel 40a in the figure so as to cross the upper ends, in the figure, of all the source lines 3 located in a corresponding one of the blocks Ba, Bb, and Bc, and is bent toward a corresponding one of the film substrates 41a and the printed wiring board 45a. Similarly, each of the second interconnect paths Wb extends along the upper side of the LCD panel 40a in the figure so as to cross the upper ends, in the figure, of the source lines 3 located in a corresponding one of the blocks Ba, Bb, and Bc, is bent toward a corresponding one of the film substrates 41 a and the printed wiring board 45a, and is connected to a corresponding one of the first interconnect paths Wa on the printed wiring board 45a. Each of the third interconnect paths Wc extends from a corresponding one of the connection portions of the first and second interconnect paths Wa, Wb along the upper side of the printed wiring board 45a in the figure, extends along the left side of the LCD panel 40a in the figure via the film substrate 41 a located on the left side in the figure, and extends along the lower side of the LCD panel 40a in the figure so as to cross the lower ends of the source lines 3 in the figure. The first interconnect path Wa is separated from the second interconnect path Wb by, e.g., 5 µm or more so that the source line 3 can be cut at a position located therebetween.

In the LCD device 50a having the above configuration, when the TFT 5 in each pixel as a minimum unit of an image is turned on in response to a gate signal sent from the gate driver (not shown) to the gate electrode 1aa via the gate line 1a, a source signal is sent from the source driver 44a to the source electrode 3a via the source line 3, and a predetermined amount of charge is written to the pixel electrode 6 via the semiconductor layer 2 and the drain electrode 3b. This produces a potential difference between the pixel electrode 6 of the active matrix substrate 20a and the common electrode 18 of the counter substrate 30, whereby a predetermined voltage is applied to the liquid crystal layer 25. The LCD device 50a displays an image by adjusting the light transmittance of the liquid crystal layer 25 by changing the alignment state of the liquid crystal layer 25 according to the magnitude of the applied voltage to the liquid crystal layer 25.

An example of a manufacturing method (and a repairing method) of the LCD device 50a of the present embodiment will be described below. Note that the manufacturing method of the present embodiment includes an active matrix substrate fabricating step, a counter substrate fabricating step, an LCD panel fabricating step, a disconnection detecting step, an interconnect connecting step, an interconnect cutting step, and a mounting step.

### [Active Matrix Substrate Fabricating Step]

First, for example, a titanium film, an aluminum film, a titanium film, etc. are sequentially formed by a sputtering method on the entire surface of an insulating substrate 10a such as a glass substrate. The films are then patterned by photolithography to form gate lines 1a, gate electrodes 1aa, capacitor lines 1b, a panel portion of first interconnect paths Wa, a panel portion of second interconnect paths Wb, and a panel portion of third interconnect paths Wc, with a thickness of about 4,000 Å.

Next, for example, a silicon nitride film, etc. is formed by a plasma chemical vapor deposition (CVD) method over the entire substrate having the gate lines 1a, the gate electrodes 1aa, the capacitor lines 1b, the panel portion of the first interconnect paths Wa, the panel portion of the second interconnect paths Wb, and the panel portion of the third interconnect paths Wc to form a gate insulating film 11 with a thickness of about 4,000 Å.

Then, for example, an intrinsic amorphous silicon film and a phosphorus-doped n⁺ amorphous silicon film are sequentially formed by a plasma CVD method over the entire substrate having the gate insulating film 11 formed thereon. The intrinsic amorphous silicon film and the phosphorus-doped n⁺ amorphous silicon film are then patterned by photolithography into an island shape on the gate electrodes 1aa to form a semiconductor formation layer in which the intrinsic amorphous silicon layer having a thickness of about 2,000 Å and the n⁺ amorphous silicon layer having a thickness of about 500 Å are stacked.

Thereafter, for example, an aluminum film, a titanium film, etc. are formed by a sputtering method over the entire substrate having the semiconductor formation layer formed thereon. The films are then patterned by photolithography to form source lines 3, source electrodes 3a, and drain electrodes 3b with a thickness of about 2,000 Å.

Then, by using the source electrodes 3a and the drain electrodes 3b as a mask, the n⁺ amorphous silicon layer of the semiconductor formation layer is etched to pattern channel portions, thereby forming a semiconductor layer 2 and TFTs 5 having the same.

For example, an acrylic photosensitive resin is then applied by a spin coating method to the entire substrate having the TFTs 5 formed thereon. The applied photosensitive resin is exposed via a photomask and developed to form an interlayer insulating film 12 having contact holes 12a on the drain electrodes 3b, and having a thickness of about 2 µm.

Subsequently, for example, an indium tin oxide (ITO) film is formed by a sputtering method over the entire substrate having the interlayer insulating film 12 formed thereon. The ITO film is then patterned by photolithography to form pixel electrodes 6 with a thickness of about 1,000 Å.

Finally, a polyimide resin is applied by a printing method to the entire substrate having the pixel electrodes 6 formed thereon. The polyimide resin is then rubbed to form an alignment film with a thickness of about 1,000 Å.

The active matrix substrate 20a can be fabricated in this manner.

### [Counter Substrate Fabricating Step]

First, for example, an acrylic photosensitive resin having fine particles such as carbon dispersed therein is applied by a spin coating method to the entire surface of an insulating substrate 10b such as a glass substrate. The applied photosensitive resin is exposed via a photomask and developed to form a black matrix 16 with a thickness of about 1.5 µm.

Next, for example, a red, green, or blue-colored acrylic photosensitive resin is applied to the substrate having the black matrix 16 formed thereon. The applied photosensitive resin is exposed via a photomask and developed to pattern a colored layer of the selected color (e.g., a red layer) with a thickness of about 2.0 µm. Similar steps are repeated for the other two colors to form colored layers of the two colors (e.g., a green layer and a blue layer) with a thickness of about 2.0 µm. A color filter 17 is formed in this manner.

For example, an ITO film is then formed by a sputtering method over the substrate having the color filter 17 formed thereon to form a common electrode 18 with a thickness of about 1,500 Å.

Thereafter, a phenol novolac photosensitive type resin is applied by a spin coating method to the entire substrate having the common electrode 18 formed thereon. The applied photosensitive resin is exposed via a photomask and developed to form photo spacers with a thickness of about 4 µm.

Finally, a polyimide resin is applied by a printing method to the entire substrate having the photo spacers formed thereon. The polyimide resin is then rubbed to form an alignment film with a thickness of about 1,000 Å.

The counter substrate 30 can be fabricated in this manner.

### [LCD Panel Fabricating Step]

First, by using, e.g., a dispenser, a sealing material, which is made of an ultraviolet (UV) curable thermosetting resin, etc., is applied (written or painted) in a frame shape to the counter substrate 30 fabricated by the counter substrate fabricating step.

Next, a liquid crystal material is dropped onto a region inside the sealing material on the counter substrate 30 having the sealing material applied thereto.

Then, the counter substrate 30 having the liquid crystal material dropped thereon is bonded under reduced pressure to the active matrix substrate 20a fabricated by the active matrix substrate fabricating step. The bonded body of the counter substrate 30 and the active matrix substrate 20a is exposed to atmospheric pressure to press the front and rear surfaces of the bonded body.

Finally, the sealing material held in the bonded body is irradiated with UV light, and the bonded body is heated to cure the sealing material.

The LCD panel 40a can be fabricated in this manner. Thereafter, polarizers are bonded to the front and rear surfaces of the LCD panel 40a, and the disconnection detecting step described below is performed. If a disconnection is detected in any of the source lines 3, the disconnection of the source line 3 is repaired by the interconnect connecting step and the interconnect cutting step described below.

### [Disconnection Detecting Step]

For example, a gate inspection signal, which is a signal of a bias voltage of-10 V and a pulse voltage of +15 V having a period of 16.7 msec and a pulse width of 50 µsec, is applied to the gate lines 1a to turn on all the TFTs 5. Moreover, a source inspection signal, which is a signal having a potential of ±2 V with its polarity inverted every 16.7 msec, is applied to the source lines 3 to write the amount of charge corresponding to ±2 V to the pixel electrodes 6 via the source electrodes 3a and the drain electrodes 3b of the TFTs 5. At the same time, a common electrode inspection signal having a direct current (DC) potential of-1 V is applied to the common electrode 18.

At this time, a voltage is applied to a liquid crystal capacitor (the liquid crystal layer 25) formed between the pixel electrodes 6 and the common electrode 18, whereby the pixels formed by the pixel electrodes 6 are operated, and the display screen switches from white display to black display in a normally white mode (white display is provided when no voltage is applied). This display state can be visually verified by placing a light source on the back side of the LCD panel 40a. In those pixels located along a disconnected source line 3, a predetermined amount of charge cannot be written to corresponding ones of the pixel electrodes 6, and these pixels are not operated (bright spots). Thus, a disconnected position (a position X) of the source line 3 is detected.

### [Interconnect Connecting Step]

As shown in FIG. 4, intersections Ma, Mb (see FIG. 1) of the upper end, in FIG. 1, of the source line 3 having a disconnection detected at the position X in the disconnection detecting step and the first interconnect path Wa and the second interconnect path Wb, and an intersection Mc (see FIG. 1) of the lower end of this source line 3 in FIG. 1 and the third interconnect path Wc are irradiated with laser light L oscillated from a yttrium aluminum garnet (YAG) laser, etc. from the insulating substrate 10a side. Thus, a contact hole 11c is formed in the gate insulating film 11 at the intersection Ma (and Mb and Mc), and metal layers that form the interconnects are melted to make an electrical connection between the upper end of the disconnected source line 3 in FIG. 1 and the first interconnect path Wa and the second interconnect path Wb, and an electrical connection between the lower end of the disconnected source line 3 in FIG. 1 and the third interconnect path Wc.

### [Interconnect Cutting Step]

In the upper end, in FIG. 1, of the source line 3 having the disconnection detected at the position X in the disconnection detecting step, a portion Y between the intersections Ma and Mb is irradiated with laser light oscillated from the YAG laser, etc. from the insulating substrate 10a side. Thus, the upper end of the disconnected source line 3 in FIG. 1 is cut at the position Y so that no source signal from the source driver 44a is directly supplied to the upper side of the disconnected source line 3 in FIG. 1.

### [Mounting Step]

Three film substrates 41a are bonded in advance to a printed wiring board 45a via an ACF, and the film substrates 41a are bonded via an ACF to the LCD panel 40a having no disconnection detected in the disconnection detecting step, or the LCD panel 40a having each disconnection repaired by the interconnect connecting step and the interconnect cutting step.

The LCD device 50a of the present embodiment can be manufactured in this manner.

As described above, according to the LCD device 50a of the present embodiment and the manufacturing method thereof, the first interconnect path Wa and the third interconnect path Wc are provided so as to cross both ends of each source line 3 in an insulating state, respectively, in order to supply the source signal from the source driver 44a to the other side (the opposite side from the source driver 44a) of the disconnected source line 3 via the amplifier circuit A. In addition, the second interconnect path Wb is provided so as to cross one end of each source line 3 in an insulating state, in order to supply the source signal from the source driver 44a to one side (the side of the source driver 44a) of the disconnected source line 3 via the amplifier circuit A. Thus, in the case where the presence of any disconnection is detected in one of all the source lines 3 placed in each block Ba-Bc in the disconnection detecting step, one end of the source line 3 having the detected disconnection is connected to the first interconnect path Wa and the second interconnect path Wb, and the other end of the source line 3 having the detected disconnection is connected to the third interconnect path Wc in the interconnect connecting step. Then, in the interconnect cutting step, the one end of the source line 3 having the detected disconnection is cut so that no source signal from the source drive 44a is directly supplied to the one side of this source line 3. Thus, the source signal from the source driver 44a is supplied not only to the other side of the repaired source line 3 but also to the one side thereof via the amplifier circuit A, whereby a signal delay that is caused in the source line 3 when repairing the disconnection can be reduced. That is, a signal delay that is caused in the source line 3 when repairing the disconnection can be reduced, and the LCD device capable of repairing disconnections while suppressing a delay of the source signal can be provided with a simple configuration.

According to the LCD device 50a of the present embodiment, the source signal from the source driver 44a is supplied to the one side of the disconnected source line 3 via the amplifier circuit A for supplying the source signal from the source driver 44a to the other side of the disconnected source line 3. Thus, a signal delay that is caused in the source line 3 when repairing the disconnection can be reduced without providing any additional amplifier circuit A.

According to the LCD device 50a of the present embodiment, since the amplifier circuit A is contained in the source driver 44a, the number of external substrates to be attached to the LCD panel 40 can be reduced.

According to the LCD device 50a of the present embodiment, since the source driver 44a is provided in each block Ba, Bb, Bc, disconnections of the source lines 3 can be repaired on a block-by-block basis.

According to the LCD device 50a of the present embodiment, since the first and second interconnect paths Wa, Wb are provided so as to be separated from each other by, e.g., 5 µm or more, the source line 3 having a detected disconnection can be easily cut at a position between the first and second interconnect paths Wa, Wb.

According to the LCD device 50a of the present embodiment, since an insulating film placed between the layer of the source lines 3 and the layers of the first, second, and third interconnect paths Wa, Wb, and Wc, and an insulating film placed between the layer of the plurality of gate lines 1a and the layer of the plurality of source lines 3 are the same gate insulating film 11, the first, second, and third interconnect paths Wa, Wb, and Wc for repairing disconnections can be configured without adding any manufacturing step.

Note that although the manufacturing method in which the polarizers are bonded before the disconnection detecting step is illustrated in the present embodiment, the polarizers may be bonded in the mounting step, etc. In the case where the polarizers are bonded in the mounting step, the polarizers are bonded to the front and rear surfaces of the LCD panel 40a in which no disconnection has been detected in the disconnection detecting step or the LCD panel 40a in which each disconnection has been repaired by the interconnect connecting step and the interconnect cutting step. In the case where the polarizers are bonded in the mounting step, the polarizers are respectively placed on the front side of the LCD panel 40a and between the LCD panel 40a and a light source in the disconnection detecting step to verify a display state.

Although the manufacturing method in which the interconnect connecting step and the interconnect cutting step are sequentially performed after the disconnection detecting step is illustrated in the present embodiment, the order of performing the interconnect connecting step and the interconnect cutting step is not particularly limited.

### (Second Embodiment)

FIG. 5 is a plan view of an LCD device 50b of the present embodiment. Note that in the following embodiments, the same parts as those of FIGS. 1-4 are denoted by the same reference characters, and detailed description thereof will be omitted.

As shown in FIG. 5, the LCD device 50b includes an LCD panel 40b, three film substrates 41 b attached to the upper end of the LCD panel 40b in the figure via an ACF (not shown), and a printed wiring board 45b attached to the upper ends of the film substrates 41b in the figure via an ACF (not shown).

As shown in FIG. 5, the LCD panel 40b is substantially the same as the LCD panel 40a of the first embodiment except for the shape of the interconnect pattern of the first, second and third interconnect paths Wa, Wb, and Wc.

As shown in FIG. 5, a source driver 44b is mounted as a drive circuit on each film substrate 41 b.

As shown in FIG. 5, all of source lines 3 located in each block Ba-Bc are connected to a corresponding one of the source drivers 44b. Each source driver 44b contains a part of a third interconnect path Wc and a first amplifier circuit Aa provided therein, and a part of a second interconnect path Wb and a second amplifier circuit Ab provided therein.

As shown in FIG. 5, the LCD device 50b has three linear first interconnect paths Wa, three second interconnect paths Wb, and three third interconnect paths Wc having substantially a "U" shape. Each of the first interconnect paths Wa extends along the upper side of the LCD panel 40b in the figure so as to cross the upper ends, in the figure, of all the source lines 3 located in a corresponding one of the blocks Ba, Bb, and Bc. Similarly, each of the second interconnect paths Wb extends along the upper side of the LCD panel 40b in the figure so as to cross the upper ends, in the figure, of the source lines 3 in a corresponding one of the blocks Ba, Bb, and Bc, and is connected to a corresponding one of the first interconnect paths Wa on the LCD panel 40b via a corresponding one of the film substrates 41b and the printed wiring board 45b. Each of the third interconnect paths Wc extends from a corresponding one of the connection portions of the first and second interconnect paths Wa, Wb, and along the upper side of the printed wiring board 45b in the figure via a corresponding one of the film substrates 41b, extends along the left side of the LCD panel 40b in the figure via the film substrate 41b located on the left side in the figure, and extends along the lower side of the LCD panel 40b in the figure so as to cross the lower ends of the source lines 3 in the figure.

The LCD device 50b having the above configuration can be manufactured by changing the pattern shape of the first, second, and third interconnect paths Wa, Wb, and Wc in the manufacturing method of the LCD device 50a of the first embodiment.

According to the LCD device 50b of the present embodiment and the manufacturing method thereof, as in the first embodiment, the first interconnect path Wa and the third interconnect path Wc are provided so as to cross both ends of each source line 3 in an insulating state, respectively, in order to supply a source signal from the source driver 44b to the other side of the disconnected source line 3 via the first amplifier circuit Aa. In addition, the second interconnect path Wb is provided so as to cross one end of each source line 3 in an insulating state, in order to supply the source signal from the source driver 44b to one side of the disconnected source line 3 via the second amplifier circuit Ab. Thus, a signal delay that is caused in the source line 3 when repairing the disconnection can be reduced. Moreover, the source signal from the source driver 44b is supplied to the one side of the disconnected source line 3 via the second amplifier circuit Ab that is different from the first amplifier circuit Aa for supplying the source signal from the source driver 44b to the other side of the disconnected source line 3. Thus, capability of the first amplifier circuit Aa can be designed separately from that of the second amplifier circuit Ab.

### (Third Embodiment)

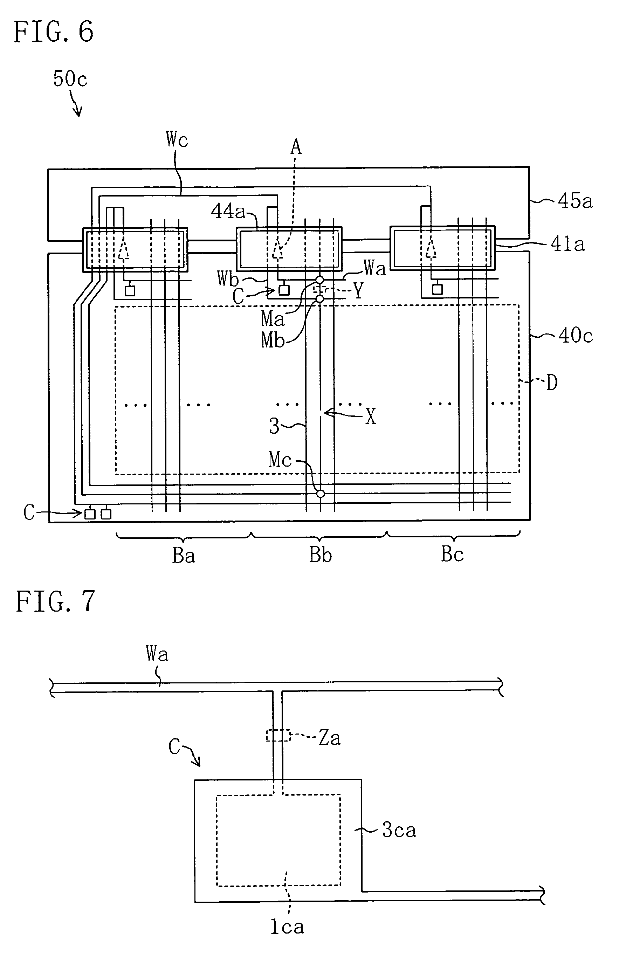

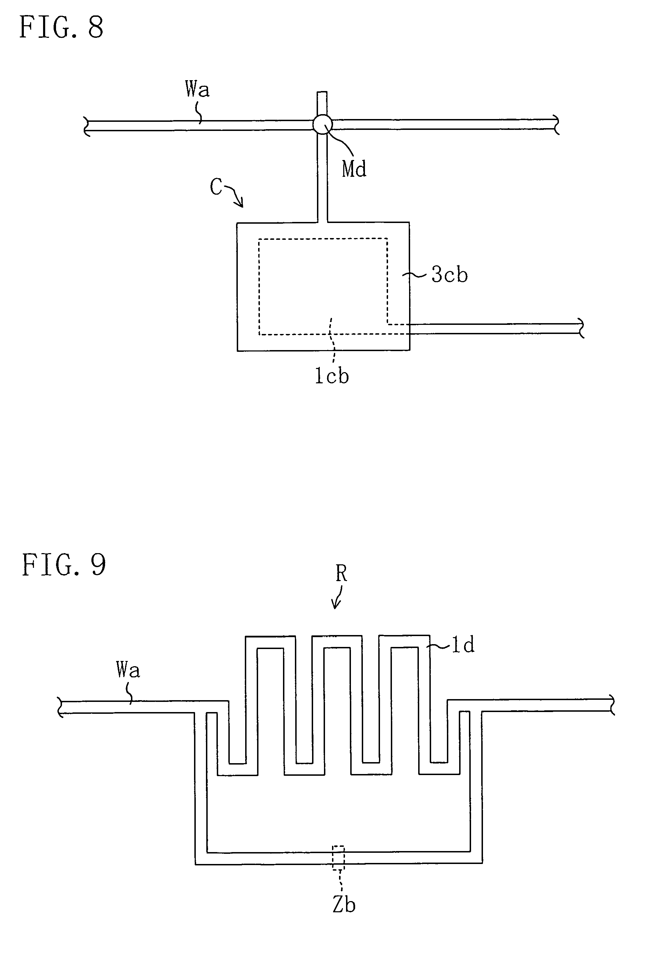

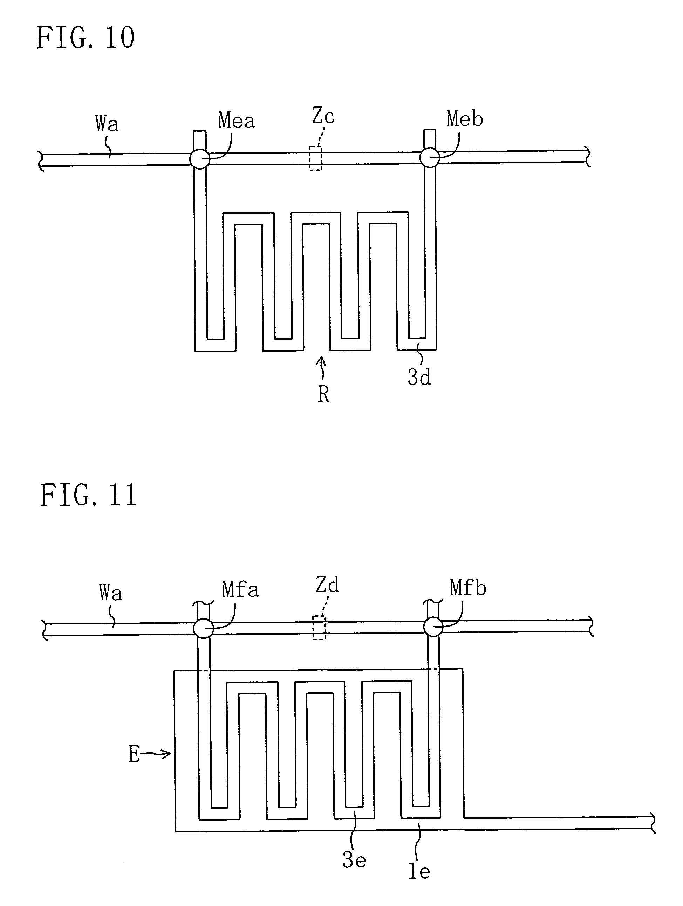

FIG. 6 is a plan view of an LCD device 50c of the present embodiment. FIG. 7 is a plan view of a load capacitor portion C of the LCD device 50c, and FIG. 8 is a plan view of another load capacitor portion C. FIG. 9 is a plan view of a load resistor portion R of the LCD device 50c, and FIG. 10 is a plan view of another load resistor portion R. FIG. 11 is a plan view of a load resistor capacitor portion E of the LCD device 50c.

As shown in FIG. 6, the LCD device 50c includes an LCD panel 40c, three film substrates 41a attached to the upper end of the LCD panel 40c in the figure via an ACF (not shown), and a printed wiring board 45a attached to the upper ends of the film substrates 41a in the figure via an ACF (not shown).

As shown in FIG. 6, the LCD panel 40c is substantially the same as the LCD panel 40a of the first embodiment except that the load capacitor portions C are provided for the first and third interconnect paths Wa, Wc.

As shown in FIG. 7, the load capacitor portion C includes an upper capacitor electrode 3ca and a lower capacitor electrode 1ca that are placed so as to face each other, and a gate insulating film (11, see FIGS. 3-4) provided between the upper capacitor electrode 3ca and the lower capacitor electrode 1ca. The upper capacitor electrode 3ca is formed of the same material in the same layer as source lines 3, and is formed in a rectangular shape. The upper capacitor electrode 3ca is connected to a capacitor line 1b or a common electrode 18. The lower capacitor electrode 1ca is formed of the same material in the same layer as gate lines 1a, and is formed in a rectangular shape. The lower capacitor electrode 1ca is connected to the first interconnect path Wa. As shown in FIG. 7, the load capacitor portion C is configured so that the load capacitor portion C can be disconnected from the first interconnect path Wa by irradiating a portion Za between the first interconnect path Wa and the lower capacitor electrode 1ca with laser light, when the load capacitor portion C is not necessary.

As shown in FIG. 8, the load capacitor portion C may include an upper capacitor electrode 3cb and a lower capacitor electrode 1cb that are placed so as to face each other, and a gate insulating film (11, see FIGS. 3-4) provided between the upper capacitor electrode 3cb and the lower capacitor electrode 1cb. The upper capacitor electrode 3cb is formed of the same material in the same layer as the source lines 3, and is formed in a rectangular shape. A connection portion linearly extending from the rectangular portion is provided so as to cross the first interconnect path Wa via the gate insulating film 11. The lower capacitor electrode 1cb is formed of the same material in the same layer as the gate lines 1a, and is formed in a rectangular shape. The lower capacitor electrode 1cb is connected the capacitor line 1b or the common electrode 18. As shown in FIG. 8, the load capacitor portion C is configured so that, when necessary, the load capacitor portion C can be connected to the first interconnect path Wa by irradiating an intersection Md of the first interconnect path Wa and the connection portion of the upper capacitor electrode 3cb with laser light.

As shown in FIGS. 9-10, a load resistor portion R may be provided for the first interconnect path Wa instead of the load capacitor portions C shown in FIGS. 7-8.

As shown in FIG. 9, the load resistor portion R is formed by an interconnect resistor portion 1d connected in parallel to a part of the first interconnect path Wa. The interconnect resistor portion 1d is formed of the same material in the same layer as the gate lines 1a, and is formed in a zigzag pattern. As shown in FIG. 9, the load resistor portion R is configured so as to allow the first interconnect path Wa to extend via the interconnect resistor portion 1d, when necessary, by cutting the first interconnect path Wa at a position Zb by irradiating the portion Zb in the first interconnect path Wa placed in parallel to the interconnect resistor portion 1d with laser light.

As shown in FIG. 10, the load resistor portion R may be formed by an interconnect resistor portion 3d that can be connected in parallel to a part of the first interconnect path Wa. As shown in FIG. 10, the interconnect resistor portion 3d is formed of the same material in the same layer as the source lines 3, and is formed in a zigzag pattern. The interconnect resistor portion 3d is provided so that both ends of the interconnect resistor portion 3d cross the first interconnect path Wa via the gate insulating film (11, see FIGS. 3-4). As shown in FIG. 10, the load resistor portion R is configured so as to allow the interconnect resistor portion 3d to be connected in parallel to the first interconnect path Wa, when necessary, by irradiating intersections Mea, Meb of the interconnect resistor portion 3d and the first interconnect path Wa with laser light, and so as to allow the first interconnect path Wa to extend via the interconnect resistor portion 3d, when necessary, by cutting the first interconnect path Wa at a position Zc by irradiating the portion Zc in the first interconnect path Wa placed in parallel to the interconnect resistor portion 3d with laser light.

As shown in FIG. 11, a load resistor capacitor portion E may be provided for the first interconnect path Wa instead of the load capacitor portions C shown in FIGS. 7-8 and the load resistor portions R shown in FIGS. 9-10.

As shown in FIG. 11, the load resistor capacitor portion E includes an interconnect resistor portion 3e capable of being connected in parallel to a part of the first interconnect path Wa, a capacitor electrode 1e placed so as to face the interconnect resistor portion 3e, and a gate insulating film (11, see FIGS. 3-4) provided between the interconnect resistor portion 3e and the capacitor electrode 1e. As shown in FIG. 11, the interconnect resistor portion 3e is formed of the same material in the same layer as the source lines 3, and is formed in a zigzag pattern. The interconnect resistor portion 3e is provided so that both ends of the interconnect resistor portion 3e cross the first interconnect path Wa via the gate insulating film (11, see FIGS. 3-4). The capacitor electrode 1e is formed of the same material in the same layer as the gate lines 1a, and is formed in a rectangular shape. The capacitor electrode 1e is connected to the capacitor line 1b or the common electrode 18. As shown in FIG. 11, the load resistor capacitor portion E is configured so as to allow the interconnect resistor portion 3e to be connected in parallel to the first interconnect path Wa, when necessary, by irradiating intersections Mfa, Mfb of the interconnect resistor portion 3e and the first interconnect path Wa with laser light, and so as to allow the first interconnect path Wa to extend via the interconnect resistor portion 3e, when necessary, by cutting the first interconnect path Wa at a position Zd by irradiating the portion Zd in the first interconnect path Wa placed in parallel to the interconnect resistor portion 3e with laser light.

The LCD device 50c having the above configuration can be manufactured by changing the shape of the interconnect pattern in the manufacturing method of the LCD device 50a of the first embodiment.

According to the LCD device 50c of the present embodiment and the manufacturing method thereof, like the first embodiment, the first interconnect path Wa and the third interconnect path Wc are provided so as to cross both ends of each source line 3 in an insulating state, respectively, in order to supply a source signal from the source driver 44a to the other side of a disconnected source line 3 via the amplifier circuit A. In addition, the second interconnect path Wb is provided so as to cross one end of each source line 3 in an insulating state, in order to supply the source signal from the source driver 44a to one side of the disconnected source line 3 via the amplifier circuit A. Thus, a signal delay that is caused in the source line 3 when repairing the disconnection can be reduced. Moreover, at least one of the load capacitor portion C, the load resistor portion R, and the load resistor capacitor portion E that are capable of adjusting the waveform of the source signal from the source driver 44a is connected to the first interconnect path Wa and the third interconnect path Wc, or is provided so as to be able to be connected to the first interconnect path Wa and the third interconnect path Wc. Thus, if pixels along the repaired source line 3 are excessively charged as compared to the other normal pixels, this source line 3 can be repaired by the first interconnect path Wa and the third interconnect path Wc by operating at least one of the load capacitor portion C, the load resistor portion R, and the load resistor capacitor portion E.

Note that the configuration in which at least one of the load capacitor portion C, the load resistor portion R, and the load resistor capacitor portion E is provided for the first interconnect path Wa and the third interconnect path Wc in the LCD device 50a of the first embodiment is illustrated in the present embodiment. In the present invention, however, at least one of the load capacitor portion C, the load resistor portion R, and the load resistor capacitor portion E may be provided for both the second interconnect path Wb and the first and third interconnect paths Wa, Wc in the LCD device 50a of the first embodiment. Alternatively, at least one of the load capacitor portion C, the load resistor portion R, and the load resistor capacitor portion E may be provided for at least one of the first interconnect path Wa, the second interconnect path Wb, and the third interconnect path Wc in the LCD device 50b of the second embodiment.

### (Fourth Embodiment)

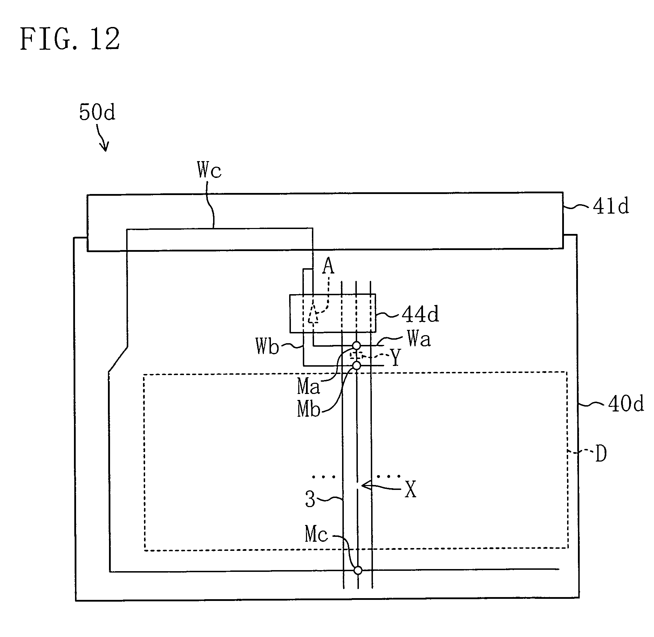

FIG. 12 is a plan view of an LCD device 50d of the present embodiment.

Although a chip on film (COF) LCD device in which a source driver is provided on a film substrate is illustrated in each of the above embodiments, a chip on glass (COG) LCD device in which a source driver is provided on an LCD panel is illustrated in the present embodiment.

As shown in FIG. 12, the LCD device 50d includes an LCD panel 40d, and a film substrate 41d attached to the upper end of the LCD panel 40d in the figure via an ACF (not shown).

As shown in FIG. 12, a single source driver 44d is mounted as a drive circuit on a region outside a display region D in the LCD panel 40d.

As shown in FIG. 12, all of source lines 3 are connected to the source driver 44d, and a single amplifier circuit A is contained in the source driver 44d.

As shown in FIG. 12, the LCD device 50d has a first interconnect path Wa having substantially an "L" shape, a second interconnect path Wb having substantially an "L" shape, and a third interconnect path Wc having substantially a "U" shape. The first interconnect path Wa extends along the upper side of the LCD panel 40d in the figure so as to cross the upper ends of source lines 3 in the figure, and is bent toward the film substrate 41 d. Similarly, the second interconnect path Wb extends along the upper side of the LCD panel 40d in the figure so as to cross the upper ends of the source lines 3 in the figure, is bent toward the film substrate 41 d, and is connected to the first interconnect path Wa before the film substrate 41d. The third interconnect path Wc extends from the connection portion of the first and second interconnect paths Wa, Wb, and along the upper side of the film substrate 41d in the figure, is bent toward the LCD panel 40d to extend along the left side of the LCD panel 40d in the figure, and extends along the lower side of the LCD panel 40d in the figure so as to cross the lower ends of the source lines 3 in the figure.

The LCD device 50d having the above configuration can be manufactured by changing the pattern shape of the first, second, and third interconnect paths Wa, Wb, and Wc in the manufacturing method of the LCD device 50a of the first embodiment.

According to the LCD device 50b of the present embodiment and the manufacturing method thereof, as in the first embodiment, the first interconnect path Wa and the third interconnect path Wc are provided so as to cross both ends of each source line 3 in an insulating state, respectively, in order to supply a source signal from the source driver 44d to the other side of a disconnected source line 3 via the amplifier circuit A. In addition, the second interconnect path Wb is provided so as to cross one end of each source line 3 in an insulating state, in order to supply the source signal from the source driver 44d to one side of the disconnected source line 3 via the amplifier circuit A. Thus, a signal delay that is caused in the source line 3 when repairing the disconnection can be reduced. Moreover, since the source driver 44d is provided in the LCD panel 40d, and the third interconnect path Wc is provided so as to extend via the film substrate 41d, the interconnect layout around the source driver 44d can be simplified.

### (Fifth Embodiment)

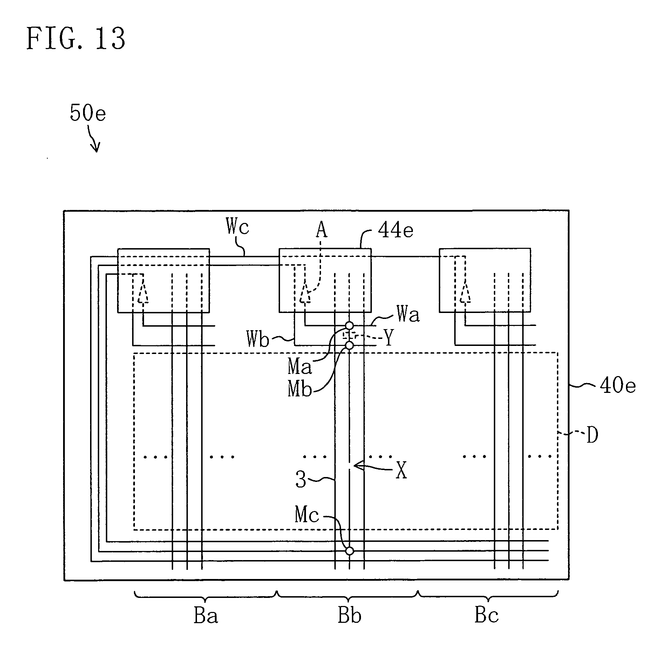

FIG. 13 is a plan view of an LCD device 50e of the present embodiment.

Although the third interconnect path Wc is provided so as to extend through the film substrate 41d in the fourth embodiment, the third interconnect paths Wc are provided only within an LCD panel 40e in the present embodiment.

As shown in FIG. 13, the LCD device 50e is formed by the LCD panel 40e.

As shown in FIG. 13, a source driver 44e is provided as a drive circuit in each block Ba, Bb, Bc in a region outside a display region D in the LCD panel 40e.

As shown in FIG. 13, all of source lines 3 placed in each block Ba-Bc are connected to a corresponding one of the source drivers 44e. Each source driver 44b contains a part of a first interconnect path Wa and an amplifier circuit A provided therein, a part of a second interconnect path Wb, and a part of a third interconnect path Wc, as described below.

As shown in FIG. 13, the LCD device 50e has three first interconnect paths Wa having substantially an "L" shape, three second interconnect paths Wb having substantially an "L" shape, and three third interconnect paths Wc having substantially a "U" shape. Each of the first interconnect paths Wa extends along the upper side of the LCD panel 40e in the figure so as to cross the upper ends, in the figure, of all the source lines 3 located in a corresponding one of the blocks Ba, Bb, and Bc, and is bent toward a corresponding one of the source drivers 44e. Similarly, each of the second interconnect paths Wb extends along the upper side of the LCD panel 40e in the figure so as to cross the upper ends, in the figure, of the source lines 3 in a corresponding one of the blocks Ba, Bb, and Bc, is bent toward a corresponding one of the source drivers 44e, and is connected to a corresponding one of the first interconnect paths Wa in the source driver 44e. Each of the third interconnect paths Wc extends from a corresponding one of the connection portions of the first and second interconnect paths Wa, Wb, and along the upper side of the LCD panel 40e in the figure and the left side of the LCD panel 40e in the figure, and extends along the lower side of the LCD panel 40e in the figure so as to cross the lower ends of the source lines 3 in the figure.

The LCD device 50e having the above configuration can be manufactured by changing the pattern shape of the first, second, and third interconnect paths Wa, Wb, and Wc in the manufacturing method of the LCD device 50a of the first embodiment.

According to the LCD device 50e of the present embodiment and the manufacturing method thereof, as in the first embodiment, the first interconnect path Wa and the third interconnect path Wc are provided so as to cross both ends of each source line 3 in an insulating state, respectively, in order to supply a source signal from the source driver 44e to the other side of a disconnected source line 3 via the amplifier circuit A. In addition, the second interconnect path Wb is provided so as to cross one end of each source line 3 in an insulating state, in order to supply the source signal from the source driver 44e to one side of the disconnected source line 3 via the amplifier circuit A. Thus, a signal delay that is caused in the source line 3 when repairing the disconnection can be reduced. Moreover, since the source drivers 44e and the first, second and third interconnect paths Wa, Wb, and Wc are provided in the LCD panel 40e, the interconnect layout in, e.g., a film substrate (not shown) that is attached to the LCD panel can be simplified.

### (Other Embodiments)

The above embodiments are described with respect to an LCD device and a manufacturing method thereof in which disconnections are repaired after fabricating an LCD panel. However, in the present invention, disconnections may be repaired after fabricating the active matrix substrate 20a of the LCD panel 40a of the first embodiment. In this case, the active matrix substrate may form an LCD device by enclosing a liquid crystal layer between the active matrix substrate itself and the counter substrate, or may form, e.g., a sensor substrate such as an X-ray sensor, which reads electrical charge held in each pixel electrode. Note that in the latter case, neither the liquid crystal layer nor the counter substrate for enclosing the liquid crystal layer is required.

Although an LCD device is described as a display device in the above embodiments, the present invention is also applicable to other display devices such as an organic electroluminescence (EL) display device and a field emission display (FED) device.

In the above embodiments, source lines are described as display interconnects in which disconnections are to be repaired. However, the present invention is applicable not only to repairing of disconnections of gate lines, but also to repairing of short-circuits between the gate line and the source line. In the case where the gate line and the source line are short-circuited together, the gate line or the source line is cut by laser radiation so that the short-circuited part is interposed between the portions irradiated with laser light, thereby disconnecting the gate line or the source line. Then, the disconnection of the gate line or the source line is repaired as described in the above embodiments.

Although each of the first, second and third interconnect paths is integrally formed in the above embodiments, each of the first, second and third interconnect paths may be formed by a plurality of interconnect portions that are provided so as to be able to be connected together.

The present invention can reduce a signal delay in a display interconnect in which a disconnection has been repaired. Thus, the present invention is especially useful not only for LCD devices for small and medium sized devices for which reduction in the number of expensive source drivers is desired, and resistance and capacitance due to interconnect paths tend to increase, but also for LCD devices for use in LCD televisions using a double speed drive method in which the charging time of pixels is relatively short.

### INDUSTRIAL APPLICABILITY

As described above, the present invention is capable of reducing a signal delay that is caused in a display interconnect when repairing a disconnection. Thus, the present invention is useful for small and medium sized devices for use in personal navigation devices, industrial equipment, information terminals, etc, for which reduction in the number of drivers is desired, and is also useful for LCD devices for use in laptop or notebook computers, monitors, LCD televisions, etc.

### DESCRIPTION OF REFERENCE CHARACTERS

- A, Aa, Ab: Amplifier Circuit
- Ba-Bc: Block
- C: Load Capacitor Portion
- E: Load Resistor Capacitor Portion
- L: Laser Light
- R: Load Resistor Portion
- Wa: First Interconnect Path
- Wb: Second Interconnect Path
- Wc: Third Interconnect Path
- 3: Source Line (Display Interconnect)
- 20a: Active Matrix Substrate
- 40a-40e: LCD Panel
- 41a, 41b, 41d: Film Substrate
- 44a, 44b, 44d, 44e: Source Driver (Drive Circuit)
- 45a, 45b: Printed Wiring Board
- 50a-50e: LCD Device

## Claims

1. A display device, comprising:
a display panel having a plurality of display interconnects provided so as to extend parallel to each other;
a drive circuit provided on a side of one ends of the display interconnects, and connected to the display interconnects;
a first interconnect path and a second interconnect path that are provided so as to cross the one ends of the display interconnects in an insulating state; and
a third interconnect path that crosses the other ends of the display interconnects in an insulating state, and is connected to the first interconnect path and the second interconnect path, wherein
an amplifier circuit is provided in a path including the first interconnect path and the second interconnect path, and in a path including the first interconnect path and the third interconnect path.

2. The display device of claim 1, wherein
the amplifier circuit is provided in the first interconnect path.

3. The display device of claim 1, wherein
the amplifier circuit is provided in each of the second interconnect path and the third interconnect path.

4. The display device of any one of claims 1 to 3, wherein
the amplifier circuit is contained in the drive circuit.

5. The display device of any one of claims 1 to 4, wherein
the plurality of display interconnects are divided into a plurality of blocks each formed by adjoining ones of the display interconnects, and
multiple ones of the drive circuit are provided for the blocks, respectively.

6. The display device of any one of claims 1 to 4, wherein
the drive circuit is a single drive circuit.

7. The display device of any one of claims 1 to 6, wherein
at least one of a load capacitor and a load resistor that are capable of adjusting a waveform of a display signal from the drive circuit is connected to at least one of the first interconnect path, the second interconnect path, and the third interconnect path.

8. The display device of any one of claims 1 to 6, wherein
at least one of a load capacitor and a load resistor that are capable of adjusting a waveform of a display signal from the drive circuit is provided so as to be able to be connected to at least one of the first interconnect path, the second interconnect path, and the third interconnect path.

9. The display device of any one of claims 1 to 8, wherein
the drive circuit is provided on the display panel,
a film substrate is attached to the display panel, and
at least one of the first interconnect path, the second interconnect path, and the third interconnect path is provided so as to extend through the film substrate.

10. The display device of any one of claims 1 to 8, wherein
a film substrate is attached to the display panel,
the drive circuit is provided on the film substrate,
a printed wiring board is attached to the film substrate, and
at least one of the first interconnect path, the second interconnect path, and the third interconnect path is provided so as to extend through the film substrate and the printed wiring board.

11. The display device of any one of claims 1 to 8, wherein
the drive circuit, the first interconnect path, the second interconnect path, and the third interconnect path are provided on the display panel.

12. The display device of any one of claims 1 to 11, wherein
the first interconnect path and the second interconnect path are provided so as to be separated from each other so that each of the display interconnects can be cut.

13. The display device of any one of claims 1 to 12, wherein
the display panel has a plurality of gate lines and a plurality of source lines, which are provided so as to cross each other, and an insulating film provided between a layer of the plurality of gate lines and a layer of the plurality of source lines, and
the display interconnects, the first interconnect path, the second interconnect path, and the third interconnect path are provided so that the display interconnects can be connected to the first interconnect path, the second interconnect path, and the third interconnect path by forming a contact hole in the insulating film.

14. A method for manufacturing a display device including
a display panel having a plurality of display interconnects provided so as to extend parallel to each other,
a drive circuit provided on a side of one ends of the display interconnects, and connected to the display interconnects,
a first interconnect path and a second interconnect path that are provided so as to cross the one ends of the display interconnects in an insulating state, and
a third interconnect path that crosses the other ends of the display interconnects in an insulating state, and is connected to the first interconnect path and the second interconnect path, where
an amplifier circuit is provided in a path including the first interconnect path and the second interconnect path, and in a path including the first interconnect path and the third interconnect path, the method comprising:
a disconnection detecting step of detecting presence of any disconnection in the display interconnects;
an interconnect connecting step of connecting the one end of the display interconnect having the disconnection detected in the disconnection detecting step to the first interconnect path and the second interconnect path, and connecting the other end of the display interconnect to the third interconnect path; and
an interconnect cutting step of cutting the one end of the display interconnect having the disconnection detected in the disconnection detecting step, so that no display signal from the drive circuit is directly supplied to one side of the display interconnect.

15. The method of claim 14, wherein
the interconnect connecting step and the interconnect cutting step are performed by laser radiation.

16. An active matrix substrate, comprising:
a plurality of display interconnects provided so as to extend parallel to each other;
a drive circuit provided on a side of one ends of the display interconnects, and connected to the display interconnects;
a first interconnect path and a second interconnect path that are provided so as to cross the one ends of the display interconnects in an insulating state; and
a third interconnect path that crosses the other ends of the display interconnects in an insulating state, and is connected to the first interconnect path and the second interconnect path, wherein
an amplifier circuit is provided in a path including the first interconnect path and the second interconnect path, and in a path including the first interconnect path and the third interconnect path.
